# EUROPÄISCHE PATENTSCHRIFT

(11) **EP 3 042 829 B1**
(45) Veröffentlichungstag und Bekanntmachung des Hinweises auf die Patenterteilung: **24.07.2019**
(21) Anmeldenummer: 15200179.8
(22) Anmeldetag: 15.12.2015
(51) Int. Cl.: B62D 15/02, B60W 30/06, B60W 50/00

(54) **VERFAHREN ZUM AUTOMATISCHEN MANÖVRIEREN EINES FAHRZEUGES AUF EINE VORDEFINIERTE, INSBESONDERE ALS PARKPLATZ VORGESEHENE, ZIELPOSITION UND MANÖVRIERSYSTEM FÜR EIN FAHRZEUG**
METHOD FOR AUTOMATICALLY MANEUVERING A VEHICLE TO A PREDEFINED TARGET POSITION, IN PARTICULAR ONE DESIGNATED AS A PARKING SPACE AND MANEUVERING SYSTEM FOR A VEHICLE
PROCEDE D'AIDE AU STATIONNEMENT AUTOMATIQUE D'UN VEHICULE SUR UNE POSITION CIBLE PREVUE EN PARTICULIER COMME STATIONNEMENT ET SYSTEME D'AIDE AU STATIONNEMENT POUR UN VEHICULE

(30) Priorität: 09.01.2015 DE 102015200167
(43) Veröffentlichungstag der Anmeldung: 13.07.2016
(73) Patentinhaber: ROBERT BOSCH GMBH, 70442 Stuttgart (DE)
(72) Erfinder: Wochele, Marco, 71134 Aidlingen-Deufringen (DE)

(56) Entgegenhaltungen:
- WO-A1-2011/154242
- WO-A2-99/06987
- DE-A1-102011 106 821

## Beschreibung

Die vorliegende Erfindung betrifft ein Verfahren zum automatischen Manövrieren eines Fahrzeuges auf eine vordefinierte, insbesondere als Parkplatz vorgesehene, Zielposition und ein Einparksystem für ein Fahrzeug. Auch betrifft die Erfindung ein Fahrzeug mit einem solchen Manövriersystem.

### Stand der Technik

Aus dem Stand der Technik sind halbautomatische Einparksysteme für Fahrzeuge bekannt. Wenn ein Fahrer eines Fahrzeuges mit einem solchen halbautomaischen Einparksystem mit dem Fahrzeug an Parklücken entlang fährt, erkennt das halbautomatische Einparksystem die Parklücken anhand von Sensorsignalen von insbesondere als Ultraschallsensoren ausgebildeten Sensoren einer am Fahrzeug angebrachten Umfeldsensorik. Zum Einparken des Fahrzeuges in eine solche erkannte Parklücke wird durch den Fahrer das Fahrzeug angehalten und eine Assistenzfunktion des halbautomatischen Einparksystems aktiviert. Nach einer Aktivierung der Assistenzfunktion übernimmt das halbautomatische Einparksystem die Kontrolle über ein Lenkrad des Fahrzeuges und steuert das Fahrzeug in die erkannte Parklücke. Der Fahrer muss allerdings selbst Gas geben und bremsen. Ein solches halbautomatische Einparksystem ist beispielsweise aus dem Dokument DE 10 2005 050 576 A1 bekannt. Aus dem Stand der Technik sind ferner auch automatische Einparksysteme bekannt, die beispielsweise durch direkten Zugriff auf eine Längsführungsaktorik eines Fahrzeugs, über die eine Bremse und ein Motor des Fahrzeuges direkt angesteuert werden können, automatisch Gas geben und bremsen, sowie einen erforderlichen Gang einlegen können.

Zurzeit werden auch einlernbare Einparksysteme entwickelt, die während einer Trainingsphase jeweils eingelernt werden können, wo sich ein vordefinierter, beispielsweise privater Parkplatz gegenüber einer ersten Startposition befindet. Ein solcher vordefinierter Parkplatz kann beispielsweise eine heimische Garage oder ein reservierter öffentlicher Stellplatz sein. Während einer der Trainingsphase folgenden Anwendungsphase braucht ein Fahrer eines Fahrzeuges mit einem solchen einlernbaren Einparksystem das Fahrzeug nur noch in der Nähe der ersten Startposition auf eine aktuelle zweite Startposition zu positionieren. Das eingelernte Einparksystem soll die zweite Startposition des Fahrzeuges relativ zur ersten Startposition beziehungsweise zum vordefinierten Parkplatz selbstständig erkennen und das sich in der zweiten Startposition befindlichen Fahrzeug automatisch auf den vordefinierten Parkplatz einparken. Dadurch, dass das einlernbare Einparksystem Sensorsignale von Sensoren einer Urnfeldsensorik des Fahrzeuges nutzen kann, bracht sich der Fahrer nicht um eine Ungenauigkeit seiner zweiten Startposition vor Beginn eines automatischen Einparkens kümmern. Ebenso werden zurzeit auch einlernbare Einparksysteme entwickelt, die während der Anwendungsphase ferngesteuert werden können. Ein Fahrer eines Fahrzeuges mit einem solchen fernsteuerbaren Einparksystem muss sich während der Anwendungsphase nicht in dem Fahrzeug befinden und kann ein automatisches Einparken des Fahrzeuges von außerhalb des Fahrzeuges überwachen.

Bei einem wie zuvor genannten einlernbaren Einparksystem wird während der Trainingsphase das Einparksystem eingelernt. Dabei wird durch einen Fahrer eines Fahrzeuges mit dem einlernbaren Einparksystem zuerst eine gewünschte erste Bahn von der ersten Startposition zu dem vordefinierten Parkplatz definiert, indem der Fahrer die erste Bahn mit dem Fahrzeug abfährt. Während der Trainingsphase ermittelt das Eiparksystem anhand von Sensorsignalen einer Umfeldsensorik des Fahrzeuges erste Informationen über ein Fahrzeugumfeld, die Informationen über den räumlichen Verlauf der ersten Bahn und/oder Informationen über sich in einem Fahrzeugumfeld befindliche Objekte und Merkmale zur Erzeugung einer Umfeldkarte umfassen. Während der Trainingsphase speichert das Eiparksystem ferner die ermittelten ersten Informationen.

Ferner erfolgt während der Anwendungsphase eine Anwendung des eingelernten Einparksystems. Während der Anwendungsphase fährt der Fahrer das Fahrzeug in die sich in der Nähe der eingelernten beziehungsweise gespeicherten ersten Startposition befindliche zweite Startposition mit einer ähnlichen Orientierung wie bei der ersten Startposition. Danach wird das eingelernte Einparksystem durch den Fahrer aktiviert. Das aktivierte Einparksystem ermittelt auch während der Anwendungsphase anhand von Sensorsignalen der Umfeldsensorik des Fahrzeuges zweite Informationen über ein Fahrzeugumfeld, die aktuelle Informationen über sich in dem Fahrzeugumfeld befindliche Objekte und Merkmale zur Erzeugung einer aktuellen Umfeldkarte umfassen. Bevorzugt speichert das aktivierte Einparksystem die ermittelten zweiten Informationen. Das aktivierte Einparksystem führt ferner ein Vergleich zwischen der in der Trainingsphase gespeicherten Umfeldkarte und der aktuellen Umfeldkarte durch und lokalisiert sich selbst, indem ein Versatz einer aktuellen Position und Orientierung des sich in der zweiten Startposition befindlichen Fahrzeuges bezüglich einer gespeicherten Position und einer gespeicherten Orientierung des sich in der ersten Startposition befindlichen Fahrzeuges ermittelt wird. Das aktivierte Einparksystem ermittelt ferner anhand der gespeicherten Informationen über den räumlichen Verlauf der ersten Bahn und des ermittelten Versatzes einen räumlichen Verlauf einer zweiten Bahn, die von der zweiten Startposition zu dem vordefinierten Parkplatz verläuft. Danach führt das aktivierte Einparksystem das Fahrzeug automatisch entlang der berechneten zweiten Bahn von der zweiten Startposition auf den vordefinierten Parkplatz. Mit anderen Worten ermittelt das aktivierte Einparksystem anhand der gespeicherten Informationen über den räumlichen Verlauf der ersten Bahn und des ermittelten Versatzes eine Korrektur der ersten Bahn, sodass das Fahrzeug bei einer automatschen Führung die erste Bahn möglichst abweichungsfrei abfährt. Dabei verläuft die zweite Bahn entlang der wie zuvor beschrieben korrigierten ersten Bahn. Während der automatischen Führung entlang der korrigierten ersten Bahn, das heißt, entlang der zweiten Bahn, lokalisiert sich das aktivierte Einparksystem selbst und vergleicht eine aktuelle Position des Fahrzeuges mit einer Position, die das Fahrzeug bei Abfahren der zweiten Bahn aktuell haben müsste.

Aus dem nächstliegenden Stand der Technik WO 99/06987 A2 ist ein Fahrassistenzsystem nach dem Oberbegriff des Anspruchs 1 bekannt, das einen Trainingsmodus und in einen Anwendungsmodus vorsieht, wonach ein sich oft wiederholendes Einparkmanöver während des Trainingsmodus gespeichert und später während des Anwendungsmodus das trainierte Parkmanöver autonom durchgeführt werden kann. Ebenfalls offenbart die WO 99/06987 A2, dass Engstellen während des Parkmanövers erfasst werden und die Seitenspiegel zur Vermeidung von Beschädigungen automatisch eingeklappt werden können.

### Offenbarung der Erfindung

Erfindungsgemäß wird ein Verfahren zum automatischen Manövrieren eines Fahrzeuges auf eine vordefinierte, insbesondere als Parkplatz vorgesehene, Zielposition bereitgestellt. Bei dem Verfahren erfolgen während einer Trainingsphase ein erster durch den Fahrer ausgeführter Manövriervorgang des Fahrzeuges von einer ersten Startposition auf die vordefinierte Zielposition und ein Ermitteln und ein Speichern von ersten Informationen über ein Fahrzeugumfeld vor und bei dem ersten Manövriervorgang. Ferner erfolgen während einer Anwendungsphase ein Ermitteln von zweiten Informationen über das Fahrzeugumfeld und ein in Abhängigkeit von den ersten Informationen und den zweiten Informationen automatisch ausgeführter zweiter Manövriervorgang des Fahrzeuges auf die vordefinierte Zielposition. Bei dem Verfahren umfassen die ersten Informationen und/oder die zweiten Informationen Positionen von bei dem entsprechenden Manövriervorgang vorkommenden Engstellen, in denen jeweils mindestens ein Objekt vorhanden ist, zu dem das Fahrzeug bei einem Vorbeifahren einen seitlichen Abstand aufweist oder aufweisen würde, der kleiner als ein oder gleich mit einem Abstandsgrenzwert ist. Ferner erfolgt bei dem Verfahren ein automatisches Einklappen mindestens eines automatisch einklappbaren und ausgeklappten Außenspiegels des Fahrzeuges während der Anwendungsphase vor einem bei dem zweiten Manövriervorgang durchzuführenden Durchfahren jeder Engstelle.

Erfindungsgemäß wird ferner ein Manövriersystem für ein Fahrzeug bereitgestellt, welches jeweils in einen Trainingsmodus und in einen Anwendungsmodus versetzbar ist und eine Zentraleinheit und eine Speichereinheit umfasst. Die Zentraleinheit ist dazu ausgebildet, in dem Trainingsmodus vor und bei einem durch einen Fahrer ausgeführten ersten Manövriervorgang des Fahrzeuges von einer ersten Startposition auf eine vordefinierte, insbesondere als Parkplatz vorgesehene, Zielposition erste Informationen über ein Fahrzeugumfeld anhand von Sensorsignalen einer am Fahrzeug angebrachten Umfeldsensorik zu ermitteln und in der Speichereinheit zu speichern. Ferner ist die Zentraleinheit dazu ausgebildet, in dem Anwendungsmodus zweite Informationen über das Fahrzeugumfeld anhand von Sensorsignalen der Umfeldsensorik zu ermitteln und in Abhängigkeit von den ersten Informationen und den zweiten Informationen erste Signale zum automatischen Ausführen eines zweiten Manövriervorgangs des Fahrzeuges auf die vordefinierte Zielposition zu erzeugen und die ersten Signale einer Aktorik zum automatischen Führen des Fahrzeuges bereitzustellen. Dabei umfassen die ersten Informationen und/oder die zweiten Informationen Positionen von bei dem entsprechenden Manövriervorgang vorkommenden Engstellen, bei denen jeweils mindestens ein Objekt vorhanden ist, zu dem das Fahrzeug bei einem Vorbeifahren einen seitlichen Abstand aufweist oder aufweisen würde, der kleiner als ein oder gleich mit einem Abstandsgrenzwert ist. Weiterhin ist die Zentraleinheit dazu ausgebildet, in dem Anwendungsmodus vor einem bei dem zweiten Manövriervorgang durchzuführenden Durchfahren jeder Engstelle mindestens ein zweites Signal zum automatischen Einklappen mindestens eines automatisch einklappbaren und ausgeklappten Außenspiegels des Fahrzeuges zu erzeugen und das mindestens eine zweite Signal einer weiteren Aktorik zum automatischen Einklappen des mindestens einen Außenspiegels bereitzustellen.

Die Unteransprüche zeigen bevorzugte Weiterbildungen der Erfindung.

Bevorzugt umfasst der erste Manövriervorgang einen ersten Einparkvorgang. Weiter bevorzugt umfasst der zweite Manövriervorgang einen zweiten Einparkvorgang.

Unter einer vordefinierten Zielposition wird hier eine während der Trainingsphase von dem Fahrer ausgewählte und befahrbare Zielposition verstanden. Eine solche vordefinierte Zielposition kann beispielsweise ein vordefinierter Parkplatz, auf der das Fahrzeug stehen bleiben soll, oder auch ein sich beispielsweise vor einer heimischen Garage befindliche, insbesondere als Engstelle ausgebildete Stelle sein, auf der das Fahrzeug nicht stehen bleiben soll, sondern von der das Fahrzeug weiterfahren soll.

Ein wesentlicher Vorteil der Erfindung ist, dass sich durch das automatische Einklappen der Außenspiegel eine Breite und folglich auch eine Außenkontur des Fahrzeugs unmittelbar verkleinern, so dass von dem Fahrzeug auch schmalere Engstellen passiert werden können.

Bei der Erfindung können sowohl die bei dem ersten Manövriervorgang als auch die bei dem zweiten Manövriervorgang vorkommenden Engstellen erkannt werden. So wird eine Position einer statische Engstelle, die beispielsweise durch ein sich in der Nähe der vordefinierten, insbesondere als Parkplatz vorgesehene, Zielposition befindliches Tor verursacht wird, während der Trainingsphase erkannt und gespeichert, so dass diese statische Engstelle rechtzeitig auch bei dem zweiten Manövriervorgang erkannt werden kann. Auch wird eine Position einer nur während der Anwendungsphase vorkommenden dynamischen Engstelle, die beispielsweise durch eine sich in der Nähe der vordefinierten Zielposition befindliche Wand und eine sich während der Anwendungsphase aber nicht während der Trainingsphase in der Nähe der vordefinierten Zielposition befindlichen Mülltonne verursacht wird, ermittelt, so dass auch diese dynamische Engstelle rechtzeitig bei dem zweiten Manövriervorgang erkannt werden kann. Vorteilhaft dabei ist folglich, dass sowohl statische als auch dynamische Engstellen rechtzeitig erkannt werden können.

Bevorzugt ist das erfindungsgemäße Manövriersystem von außerhalb des Fahrzeuges fernsteuerbar. Bei einem solchen fernsteuerbaren Manövriersystem ist eine Nutzung der Außenspiegel durch einen Fahrer des Fahrzeuges ohnehin nicht gegeben, da der Fahrer vor dem zweiten Manövriervorgang das Fahrzeuges in die zweite Startposition positioniert, aus dem Fahrzeug aussteigt und das fernsteuerbare Manövriersystem von außerhalb des Fahrzeuges in den Anwendungsmodus versetzt.

Dadurch, dass sich in dem Anwendungsmodus die Breite des Fahrzeuges durch das automatische Einklappen der Außenspiegel verkleinert, vergrößert sich ein Sicherheitsabstand zwischen dem Fahrzeug und jedem sich in einer Engstelle befindlichen Objekt. Deswegen ist davon auszugehen, dass ein erfindungsgemäßes Manövriersystem generell eine höhere Akzeptanz bei Anwendern finden wird, da jeder Anwender eines Fahrzeuges mit einem erfindungsgemäßen Manövriersystem sein Fahrzeug als weniger gefährdet wahrnimmt.

Bei einer sehr bevorzugten Ausführungsform der Erfindung erfolgt ein automatisches Ausklappen des mindestens einen eingeklappten Außenspiegels während der Anwendungsphase nach dem bei dem zweiten Manövriervorgang durchzuführenden Durchfahren jeder Engstelle.

Erfindungsgemäß umfasst der erste Manövriervorgang ein durch den Fahrer ausgeführtes Abfahren einer ersten Bahn, die von der ersten Startposition bis zu der vordefinierten Zielposition verläuft. Dabei erfolgt während der Anwendungsphase ein Berechnen einer von einer zweiten Startposition bis zu der vordefinierten Zielposition verlaufenden zweiten Bahn anhand der ersten Informationen und der zweiten Informationen. Ferner umfasst der zweite Manövriervorgang ein automatisch ausgeführtes Abfahren der zweiten Bahn.

Bevorzugt erfolgt das Abfahren der ersten Bahn bei einer Fahrzeuggeschwindigkeit von weniger als 20 km/h. Weiter bevorzugt erfolgt das Abfahren der zweiten Bahn bei einer Fahrzeuggeschwindigkeit von weniger als 20 km/h.

Vorzugsweise ist das erfindungsgemäße Manövriersystem ein Einparksystem.

Ein weiterer Aspekt der Erfindung betrifft ein Fahrzeug mit einer Umfeldsensorik, einem erfindungsgemäßen Manövriersystem, einer Aktorik zum automatischen Führen des Fahrzeuges, mindestens einem automatisch einklappbaren Außenspiegel und einer weiteren Aktorik zum automatischen Einklappen des mindestens einen Außenspiegels.

### Kurze Beschreibung der Zeichnung

Nachfolgend werden Ausführungsbeispiele der Erfindung unter Bezugnahme auf die begleitende Zeichnung im Detail beschrieben. Für gleiche Komponenten und Parameter werden jeweils gleiche Bezugszeichen verwendet. In der Zeichnung ist:

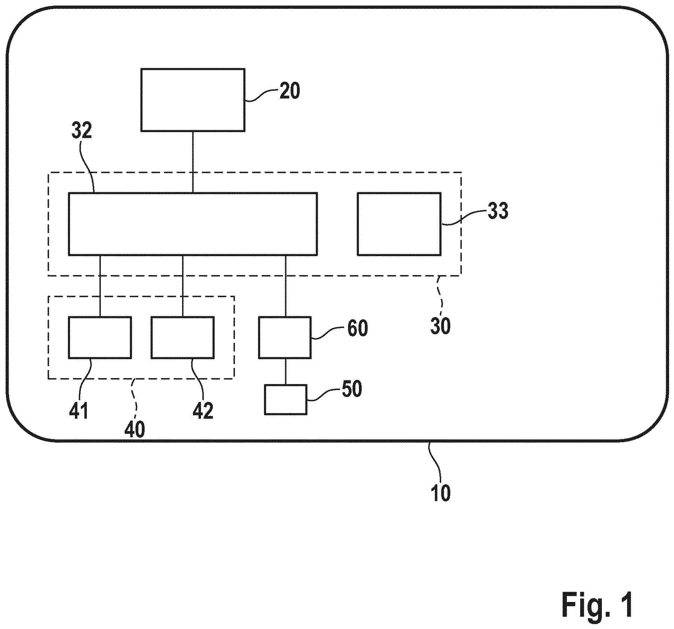

- Figur 1: ein Fahrzeug mit einer Umfeldsensorik, einem Manövriersystem nach einer ersten Ausführungsform der Erfindung, einer Aktorik zum automatischen Führen des Fahrzeuges, automatisch einklappbaren Außenspiegeln und einer weiteren Aktorik zum automatischen Einklappen der Außenspiegel.

### Ausführungsform der Erfindung

Figur 1 zeigt ein Fahrzeug 10 mit einer Umfeldsensorik 20, einem Manövriersystem 30 nach einer ersten Ausführungsform der Erfindung, einer Aktorik 40 zum automatischen Führen des Fahrzeuges 10, automatisch einklappbaren Außenspiegeln 50 und einer weiteren Aktorik 60 zum automatischen Einklappen der Außenspiegel 50. Zur Vereinfachung der Darstellung wird in der Figur 1 nur ein einzelner automatisch einklappbarer Außenspiegel 50 gezeigt.

Die Aktorik 40 zum automatischen Führen des Fahrzeuges 10 umfasst eine Längsführungsaktorik 41, über die das Fahrzeug 10 automatisch gebremst und beschleunigt und einen erforderlichen Gang automatisch eingelegt werden kann, und eine Lenkaktorik 42, über die das Fahrzeug 10 automatisch gelenkt werden kann.

Das Manövriersystem 30 ist jeweils in einen Trainingsmodus und in einen Anwendungsmodus versetzbar und umfasst eine Zentraleinheit 32 und eine Speichereinheit 33.

Während einer Trainingsphase wird das Manövriersystem 30 in den Trainingsmodus versetzt. Ferner erfolgt während der Trainingsphase ein Abfahren einer von einer ersten Startposition zu einer vordefinierten, insbesondere als Parkplatz vorgesehenen, Zielposition verlaufenden ersten Bahn mit dem durch einen Fahrer geführten Fahrzeug 10. Dabei ist die Zentraleinheit 32 dazu ausgebildet, in dem Trainingsmodus vor und bei dem Abfahren der ersten Bahn erste Informationen über ein Fahrzeugumfeld anhand von Sensorsignalen der am Fahrzeug 10 angebrachten Umfeldsensorik 20 zu ermitteln und in der Speichereinheit 33 zu speichern. Die ersten Informationen umfassen Informationen über den räumlichen Verlauf der ersten Bahn und/oder Informationen über sich während der Trainingsphase in dem Fahrzeugumfeld befindliche Objekte und Merkmale. Die Zentraleinheit 32 ist weiter dazu ausgebildet, in dem Trainingsmodus aus den ermittelten Informationen über sich während der Trainingsphase in dem Fahrzeugumfeld befindliche Objekte und Merkmale eine Umfeldkarte zu erzeugen und diese in der Speichereinheit 33 zu speichern. Ferner ist die Zentraleinheit 32 dazu ausgebildet, in dem Trainingsmodus aus der erzeugten Umfeldkarte anhand von Rechenalgorithmen Engstellen, die bei dem Abfahren der ersten Bahn vorkommen, zu erkennen und deren Positionen bezüglich der ersten Bahn zu ermitteln und in der Speichereinheit 33 zu speichern. Jede bei dem Abfahren der ersten Bahn vorkommende Engstelle ist als eine bei dem Abfahren der ersten Bahn vorkommende Stelle definiert, in der mindestens ein Objekt vorhanden ist, zu dem das Fahrzeug 10 bei einem Vorbeifahren einen seitlichen Abstand aufweist, der kleiner als ein oder gleich mit einem Abstandsgrenzwert ist.

Weiterhin wird während einer Anwendungsphase das Manövriersystem 30 in den Anwendungsmodus versetzt. Die Zentraleinheit 32 ist dazu ausgebildet, in dem Anwendungsmodus zweite Informationen über das Fahrzeugumfeld anhand von Sensorsignalen der Umfeldsensorik 20 zu ermitteln und eine zweite Bahn in Abhängigkeit von den ersten Informationen und den zweiten Informationen zu berechnen. Ferner ist die ist die Zentraleinheit 32 dazu ausgebildet, in dem Anwendungsmodus erste Signale zum automatischen Führen des Fahrzeuges 10 entlang der zweiten Bahn zu erzeugen und die ersten Signale einer Aktorik 40 zum automatischen Führen des Fahrzeuges 10 bereitzustellen. Dabei umfassen die ersten Signale Signale für die Längsführungsaktorik 41, die der Längsführungsaktorik 41 von der Zentraleinheit 32 bereitgestellt werden. Ferner umfassen die ersten Signale auch Signale für die Lenkaktorik 42, die der Lenkaktorik 42 von der Zentraleinheit 32 bereitgestellt werden. Bei Vorliegen der ersten Signale wird das Fahrzeug 10 mittels der Längsführungsaktorik 41 und der Lenkaktorik 42 automatisch entlang der zweiten Bahn geführt.

Die zweiten Informationen umfassen aktuelle Informationen über sich während der Anwendungsphase in dem Fahrzeugumfeld befindliche Objekte und Merkmale. Die Zentraleinheit 32 ist weiter dazu ausgebildet, in dem Anwendungsmodus aus den ermittelten Informationen über sich während der Anwendungsphase in dem Fahrzeugumfeld befindliche Objekte und Merkmale eine aktuelle Umfeldkarte zu erzeugen. Auch ist die Zentraleinheit 32 dazu ausgebildet, in dem Anwendungsmodus aus der erzeugten aktuellen Umfeldkarte anhand der Rechenalgorithmen Engstellen, die sich aktuell entlang der zweiten Bahn unmittelbar vor dem Fahrzeug oder in größerem Abstand vor dem Fahrzeug befinden, zu erkennen und deren Positionen bezüglich der zweiten Bahn zu ermitteln. Jede aktuell sich entlang der zweiten Bahn befindliche Engstelle ist als eine aktuelle entlang der zweiten Bahn befindliche Stelle definiert, in der mindestens ein Objekt vorhanden ist, zu dem das Fahrzeug 10 bei einem Vorbeifahren einen seitlichen Abstand aufweisen würde, der kleiner als ein oder gleich mit dem Abstandsgrenzwert ist.

Des Weiteren ist die Zentraleinheit 32 dazu ausgebildet, in dem Anwendungsmodus vor einem bei einem automatischen Abfahren der zweiten Bahn durchzuführenden Durchfahren jeder bei dem Abfahren der ersten Bahn vorgekommenen Engstelle und/oder jeder sich aktuell entlang der zweiten Bahn befindlichen Engstelle, mindestens ein zweites Signals zum automatischen Einklappen der automatisch einklappbaren und ausgeklappten Außenspiegel 50 des Fahrzeuges 10 zu erzeugen und das mindestens eine zweite Signal der weiteren Aktorik 60 zum automatischen Einklappen der Außenspiegel 50 bereitzustellen. Bei Vorliegen des mindestens einen zweiten Signals werden die Außenspiegel 50, wenn diese ausgeklappt sind, mittels der weiteren Aktorik 60 automatisch eingeklappt.

Neben der voranstehenden schriftlichen Offenbarung wird hiermit zur weiteren Offenbarung der Erfindung ergänzend auf die Darstellung in der Figur 1 Bezug genommen.

## Patentansprüche

1. Verfahren zum automatischen Manövrieren eines Fahrzeuges (10) auf eine vordefinierte, insbesondere als Parkplatz vorgesehene, Zielposition, wobei während einer Trainingsphase ein erster durch den Fahrer ausgeführter Manövriervorgang des Fahrzeuges (10) von einer ersten Startposition auf die vordefinierte Zielposition und ein Ermitteln und ein Speichern von ersten Informationen über ein Fahrzeugumfeld vor und bei dem ersten Manövriervorgang erfolgen und während einer Anwendungsphase ein Ermitteln von zweiten Informationen über das Fahrzeugumfeld und ein in Abhängigkeit von den ersten Informationen und den zweiten Informationen automatisch ausgeführter zweiter Manövriervorgang des Fahrzeuges (10) auf die vordefinierte Zielposition erfolgen, wobei die ersten Informationen und/oder die zweiten Informationen Positionen von bei dem entsprechenden Manövriervorgang vorkommenden Engstellen umfassen, in denen jeweils mindestens ein Objekt vorhanden ist, zu dem das Fahrzeug (10) bei einem Vorbeifahren einen seitlichen Abstand aufweist oder aufweisen würde, der kleiner als ein oder gleich mit einem Abstandsgrenzwert ist, und ein automatisches Einklappen mindestens eines automatisch einklappbaren und ausgeklappten Außenspiegels (50) des Fahrzeuges (10) während der Anwendungsphase vor einem bei dem zweiten Manövriervorgang durchzuführenden Durchfahren jeder Engstelle erfolgt **dadurch gekennzeichnet, dass** der erste Manövriervorgang ein durch den Fahrer ausgeführtes Abfahren einer ersten Bahn, die von der erster Startposition bis zu der vordefinierten Zielposition verläuft, umfasst, während der Anwendungsphase ein Berechnen einer von einer zweiten Startposition bis zu der vordefinierten Zielposition verlaufenden zweiten Bahn anhand der ersten Informationen und der zweiten Informationen erfolgt und der zweite Manövriervorgang ein automatisch ausgeführtes Abfahren der zweiten Bahn umfasst.

2. Verfahren nach Anspruch 1, **gekennzeichnet durch** automatisches Ausklappen des mindestens einen eingeklappten Außenspiegels (50) während der Anwendungsphase nach dem bei dem zweiten Manövriervorgang durchzuführenden Durchfahren jeder Engstelle.

3. Manövriersystem (30) für ein Fahrzeug (10), welches jeweils in einen Trainingsmodus und in einen Anwendungsmodus versetzbar ist und eine Zentraleinheit (32) und eine Speichereinheit (33) umfasst, wobei die Zentraleinheit (32) dazu ausgebildet ist, in dem Trainingsmödus vor und bei einem durch einen Fahrer ausgeführten ersten Manövriervorgang des Fahrzeuges (10) von einer ersten Startposition auf eine vordefinierte, insbesondere als Parkplatz vorgesehene, Zielposition erste Informationen über ein Fahrzeugumfeld anhand von Sensorsignalen einer am Fahrzeug (10) angebrachten Umfeldsensorik (20) zu ermitteln und in der Speichereinheit (33) zu speichern und in dem Anwendungsmodus zweite Informationen über das Fahrzeugumfeld anhand von Sensorsignalen der Umfeldsensorik (20) zu ermitteln, in Abhängigkeit von den ersten Informationen und den zweiten Informationen erste Signale zum automatischen Ausführen eines zweiten Manövriervorganges des Fahrzeuges (10) auf die vordefinierte Zielposition zu erzeugen und die ersten Signale einer Aktorik (40) zum automatischen Führen des Fahrzeuges (10) bereitzustellen,
wobei die ersten Informationen und/oder die zweiten Informationen Positionen von bei dem entsprechenden Manövriervorgang vorkommenden Engstellen umfassen, in denen jeweils mindestens ein Objekt vorhanden ist, zu dem das Fahrzeug (10) bei einem Vorbeifahren einen seitlichen Abstand aufweist oder aufweisen würde, der kleiner als ein oder gleich mit einem Abstandsgrenzwert ist, und die Zentraleinheit (32) dazu ausgebildet ist, in dem Anwendungsmodus vor einem bei dem zweiten Manövriervorgang durchzuführenden Durchfahren jeder Engstelle mindestens ein zweites Signal zum automatischen Einklappen mindestens eines automatisch einklappbaren und ausgeklappten Außenspiegels (50) des Fahrzeuges (10) zu erzeugen und das mindestens eine zweite Signal einer weiteren Aktorik (60) zum automatischen Einklappen des mindestens einen Außenspiegels (50) bereitzustellen
**dadurch gekennzeichnet, dass** der erste Manövriervorgang ein durch den Fahrer ausgeführtes Abfahren einer ersten Bahn, die von der erster Startposition bis zu der vordefinierten Zielposition verläuft, umfasst, die Zentraleinheit (32) weiter dazu ausgebildet ist, in dem Anwendungsmodus eine von einer zweiten Startposition bis zu der vordefinierten Zielposition verlaufende zweite Bahn anhand der ersten Informationen und der zweiten Informationen zu berechnen und die ersten Signale zum automatischen Ausführen des zweiten Manövriervorganges als Signale zum automatischen Abfahren der zweiten Bahn zu erzeugen..

4. Manövriersystem (30) nach Anspruch 3, **dadurch gekennzeichnet, dass** die Zentraleinheit (32) weiter dazu ausgebildet ist, in dem Anwendungsmodus nach dem bei dem zweiten Manövriervorgang durchzuführenden Durchfahren jeder Engstelle mindestens ein drittes Signal zum automatisches Ausklappen des mindestens einen eingeklappten Außenspiegels (50) zu erzeugen und das mindestens eine dritte Signal der weiteren Aktorik (60) bereitzustellen.

5. Fahrzeug (10) mit einer Umfeldsensorik (20), einem Manövriersystem (30) nach einem der Ansprüche 3 bis 5, einer Aktorik (40) zum automatischen Führen des Fahrzeuges, mindestens einem einklappbaren Außenspiegel (50) und einer weiteren Aktorik (60) zum automatischen Einklappen des mindestens einen Außenspiegels (50).

## Claims

1. Method for automatically manoeuvring a vehicle (10) to a predefined target position, in particular one designated as a parking space, wherein during a training phase a first manoeuvring process of the vehicle (10) which is executed by the driver occurs from a first starting position to the predefined target position, and first information about the surroundings of the vehicle is determined and stored before and during the first manoeuvring process, and during an application phase second information about the surroundings of the vehicle is determined, and a second manoeuvring process of the vehicle (10), which is executed automatically as a function of the first information and the second information, to the predefined target position occurs, and wherein the first information and/or the second information comprises positions of constriction which occur during the corresponding manoeuvring process and at which there is in each case at least one object from which the vehicle (10) is or would be at a lateral distance which is less than or equal to the distance limiting value as said vehicle travels past, and at least one exterior rear view mirror (50), which can be automatically folded in and is folded out, of the vehicle (10) is folded in automatically during the application phase before the passage through each constriction, which is to be carried out during the second manoeuvring process, **characterized in that** the first manoeuvring process comprises travel along a first path which is executed by the driver, said path running from the first starting position up to the predefined target position, during the application phase, a second path, running from a second starting position to the predefined target position, is calculated on the basis of the first information and the second information, and the second manoeuvring process comprises automatically executed travel along the second path.

2. Method according to Claim 1, **characterized by** automatic folding out of the at least one folded-in exterior rear view mirror (50) during the application phase after the passage through each constriction which is to be carried out during the second manoeuvring process.

3. Manoeuvring system (30) for a vehicle (10), which can be respectively placed in a training mode and in an application mode and which comprises a central processor unit (32) and a memory unit (33), wherein the central processor unit (32) is designed to determine, in the training mode, first information about the surroundings of the vehicle on the basis of sensor signals of a surroundings sensor system (20) mounted on the vehicle (10), before and during a first manoeuvring process, executed by a driver, of the vehicle (10) from a first starting position to a predefined target position, designated in particular as a parking space, and to store said information in the memory unit (33), and to determine, in the application mode, second information about the surroundings of the vehicle on the basis of sensor signals of the surroundings sensor system (20) to generate, as a function of the first information and the second information, first signals for the automatic execution of a second manoeuvring process of the vehicle (10) to the predefined target position, and to make available first signals of an actuator system (40) for automatically guiding the vehicle (10),
wherein the first information and/or the second information comprises positions of the constrictions which occur during the corresponding manoeuvring process, at each of which constrictions at least one object is present from which the vehicle (10) is or would be at a lateral distance which is less than or equal to a distance limiting value when said vehicle travels past, and the central processor unit (32) is designed to produce, in the application mode, at least one second signal for automatically folding in at least one exterior rear view mirror (50), which can be automatically folded in and is folded out, of the vehicle (10), before passage through each constriction which is to be carried out during the second manoeuvring process, and to make available the at least one second signal to a further actuator system (60) for automatically folding in the at least one exterior rear view mirror (50),
**characterized in that** the first manoeuvring process comprises travel along a first path, which is executed by the driver, which path runs from the first starting position to the predefined target position, and the central processor unit (32) is also designed to calculate, in the application mode, a second path which runs from a second starting position to the predefined target position, on the basis of the first information and the second information, and to produce the first signals for the automatic execution of the second manoeuvring process as signals for the automatic travel along the second path.

4. Manoeuvring system (30) according to Claim 3, **characterized in that** the central processor unit (32) is also designed to produce, in the application mode, at least a third signal for the automatic folding out of the at least one folded-in exterior rear view mirror (50) after the passage through each constriction point which is to be carried out during the second manoeuvring process, and to make available the at least one third signal of the further actuator system (60).

5. Vehicle (10) having a surroundings sensor system (20), a manoeuvring system (30) according to one of Claims 3 to 5, an actuator system (40) for automatically guiding the vehicle, at least one exterior rear view mirror (50) which can be folded in and a further actuator system (60) for automatically folding in the at least one exterior rear view mirror (50).

## Revendications

1. Procédé de manoeuvre automatique d'un véhicule (10) sur une position cible prédéfinie, notamment prévue sous forme de place de stationnement, dans lequel, pendant une phase d'entraînement, sont effectuées une première opération de manoeuvre du véhicule (10) réalisée par le conducteur d'une première position de départ à la position cible prédéfinie et une détermination et une mémorisation de premières informations concernant un environnement du véhicule avant et pendant la première opération de manoeuvre, et pendant une phase d'application, sont effectuées une détermination de deuxièmes informations concernant l'environnement du véhicule et une deuxième opération de manoeuvre du véhicule (10) réalisée automatiquement en fonction des premières informations et des deuxièmes informations jusqu'à la position cible prédéfinie, les premières informations et/ou les deuxièmes informations comprenant des positions d'étranglements se présentant lors de l'opération de manoeuvre correspondante, dans lesquelles se trouve à chaque fois au moins un objet, par rapport auquel le véhicule (10) présente ou présenterait un espacement latéral s'il passe ou passait devant lui, lequel est inférieur ou égal à une valeur limite d'espacement et un rabattement automatique d'au moins un rétroviseur extérieur (50) du véhicule (10) pouvant être rentré automatiquement et sorti étant effectué pendant la phase d'application avant un passage à travers chaque étranglement devant être effectué lors de la deuxième opération de manoeuvre, **caractérisé en ce que** la première opération de manoeuvre comprend la sortie d'une première voie effectuée par le conducteur, qui s'étend depuis la première position de départ jusqu'à la position cible prédéfinie, pendant la phase d'application, on effectue, à l'aide des premières informations et des deuxièmes informations, un calcul d'une deuxième voie s'étendant depuis une deuxième position de départ jusqu'à la position cible prédéfinie et la deuxième opération de manoeuvre comprend une sortie de la deuxième voie réalisée automatiquement.

2. Procédé selon la revendication 1, **caractérisé par** la sortie automatique de l'au moins un rétroviseur extérieur rabattu (50) pendant la phase d'application après le passage à travers chaque étranglement devant être effectué lors de la deuxième opération de manoeuvre.

3. Système de manoeuvre (30) pour un véhicule (10) qui peut être amené à chaque fois dans un mode d'entraînement et dans un mode d'application et qui comprend une unité centrale (32) et une unité de mémoire (33), l'unité centrale (32) étant réalisée pour déterminer, dans le mode d'entraînement, avant et pendant une première opération de manoeuvre du véhicule (10) effectuée par un conducteur d'une première position de départ à une position cible prédéfinie, notamment prévue sous forme de place de stationnement, des premières informations concernant un environnement du véhicule à l'aide de signaux de capteurs d'un système de capteurs d'environnement (20) monté sur le véhicule (10) et pour les mémoriser dans l'unité de mémoire (33) et, dans le mode d'application, pour déterminer des deuxièmes informations concernant l'environnement du véhicule à l'aide de signaux de capteurs du système de capteurs d'environnement (20), pour générer, en fonction des premières informations et des deuxièmes informations, des premiers signaux pour effectuer automatiquement une deuxième opération de manoeuvre du véhicule (10) jusqu'à la position cible prédéfinie, et pour fournir les premiers signaux à un système d'actionneurs (40) en vue de la conduite automatique du véhicule (10),
les premières informations et/ou les deuxièmes informations comprenant des positions d'étranglements se présentant lors de l'opération de manoeuvre correspondante, dans lesquelles se trouve à chaque fois au moins un objet, par rapport auquel le véhicule (10) présente ou présenterait un espacement latéral s'il passe ou passait devant lui, lequel est inférieur ou égal à une valeur limite d'espacement et l'unité centrale (32) étant réalisée pour générer, dans le mode d'application, au moins un deuxième signal pour rabattre automatiquement au moins un rétroviseur extérieur (50) du véhicule (10) pouvant être rentré automatiquement et sorti, avant un passage à travers chaque étranglement devant être effectué lors de la deuxième opération de manoeuvre et pour fournir l'au moins un deuxième signal à un système d'actionneurs supplémentaire (60) pour rabattre automatiquement l'au moins un rétroviseur extérieur (50),
**caractérisé en ce que** la première opération de manoeuvre comprend une sortie d'une première voie, effectuée par le conducteur, qui s'étend depuis la première position de départ jusqu'à la position cible prédéfinie, et l'unité centrale (32) est en outre réalisée pour calculer, dans le mode d'application, une deuxième voie s'étendant depuis une deuxième position de départ jusqu'à la position cible prédéfinie à l'aide des premières informations et des deuxièmes informations et pour générer les premiers signaux pour effectuer automatiquement la deuxième opération de manoeuvre en tant que signaux de sortie automatique de la deuxième voie.

4. Système de manoeuvre (30) selon la revendication 3, **caractérisé en ce que** l'unité centrale (32) est en outre réalisée, dans le mode d'application, après le passage à travers chaque étranglement devant être effectué lors de la deuxième opération de manoeuvre, pour générer au moins un troisième signal pour sortir automatiquement l'au moins un rétroviseur extérieur rabattu (50) et pour fournir l'au moins un troisième signal au système d'actionneurs supplémentaire (60).

5. Véhicule (10) comprenant un système de capteurs d'environnement (20), un système de manoeuvre (30) selon l'une quelconque des revendications 3 à 5, un système d'actionneurs (40) pour conduire automatiquement le véhicule, au moins un rétroviseur extérieur rabattable (50) et un système d'actionneurs supplémentaire (60) pour rabattre automatiquement l'au moins un rétroviseur extérieur (50).
